# EUROPEAN PATENT APPLICATION

(11) **EP 4 825 820 A1**
(43) Date of publication of application: **21.10.2026**
(21) Application number: 25170654.5
(22) Date of filing: 15.04.2025
(51) Int. Cl.: C04B 7/13, C04B 7/153, C04B 28/06, C04B 28/14

(54) **HYDRAULIC BINDER COMPOSITIONS COMPRISING LADLE SLAG**

(71) Applicant: Sika Technology AG, 6340 Baar (CH)
(72) Inventor: LE SAINT, Guillaume, 38070 St. Quentin Fallavier (FR); LEVESQUE, Olivier, 38070 St. Quentin Fallavier (FR); MARTIN, Charlene, 38070 St. Quentin Fallavier (FR); SOUDIER, Jerome, 38070 St. Quentin Fallavier (FR)
(74) Representative: Sika Patent Attorneys

(57) **Abstract**

The present invent relates to hydraulic binder compositions comprising ladle slag as an activator. Ladle slag is used as an activator for a hydraulic binder not comprising Portland cement.

## Description

### Technical Field

The present invent relates to hydraulic binder compositions comprising ladle slag as activator. The present invention also relates to dry mortars and construction compositions based on hydraulic binder compositions comprising ladle slag.

### Background of the invention

It is known in the field of construction materials to replace Portland cement in whole or in parts by various other cements or supplementary cementitious materials (SCM). One reason being the achievement of new and advantageous properties. Another reason being the reduction of greenhouse gases associated with the production of Portland cement.

It is likewise known that the use of alternative cements and/or SCM often require combination with suitable activators. Thereby, it is possible for construction materials based on such alternative cements and/or SCM to harden to the desired strength.

It is known that various aluminum based materials can be used as activators for alternative cements and/or SCM.

For example, WO 2019/086781 teaches that high aluminum slag can be used as an activator for calcium aluminosilicates.

For example, WO 2022/122343 discloses a binder based on granulated blast furnace slag and calcium sulfate activated by a composition comprising calcium aluminate and calcium hydroxide.

A material that has not yet found widespread use in construction materials is ladle slag. Ladle slags are formed during the production of steel. They are obtained as the by-product from the ladle furnace where liquid steel from a converter or from an electric arc furnace is heated up to the proper casting temperature and is prepared for specific requirements of its composition. Ladle slags can be distinguished from other ironmaking or steelmaking slags by their chemical and mineralogical composition. In particular, ladle slags contain calcium aluminate and calcium silicate mineral phases and should therefore be useful in hydraulic binder compositions.

Ladle slags are disclosed in US2024/190772 to be suitable as hydraulic binders in mortar compositions when used in combination with Portland cement and calcium aluminate cement.

There remains, however, a need for optimal usage of ladle slags in hydraulic binder compositions, in particular as activators to enable proper activation of a primary binder comprising alternative cements and/or SCM.

### Summary of the invention

It is an object of the present invention to provide hydraulic binder compositions comprising ladle slag as activator. It is another object of the present invention to provide suitable kinetic regulators for hydraulic binder compositions comprising ladle slag as main activator. The present invention also provides dry mortars comprising hydraulic binders comprising ladle slag.

Surprisingly, it has been found that ladle slag is a suitable activator for hydraulic binders, especially for hydraulic binders that have a low content of Portland cement or that are free of Portland cement.

The objectives of the present invention are therefore solved by a hydraulic binder composition as claimed in claim 1.

Further aspects of the present invention are the subject matter of independent claims. Preferred embodiments are the subject matter of dependent claims.

### Detailed Ways

In a first aspect, the present invention relates to a hydraulic binder composition comprising
a) a hydraulic binder selected from the group consisting of calcium aluminate cement, calcium sulfoaluminate cement, pozzolanic materials, latent hydraulic materials, or mixtures thereof,
b) an activator comprising or consisting of ladle slag.

Preferably, the ladle slag is present in an amount of not more than 35 w%, preferably not more than 20 w%, more preferably between 1 - 15 w%, especially between 3 - 10 w%, relative to the total dry weight of the hydraulic binder.

Preferably, the hydraulic binder comprises Portland cement in an amount of not more than 6 w%, preferably not more than 1 w%, preferably not more than 0.1 w%, especially 0 w%, relative to the total dry weight of the hydraulic binder composition. It is particularly preferred that the hydraulic binder composition is free from Portland cement.

Within the present context a hydraulic binder is a mineral binder that chemically reacts with water to form hydrate phases. A chemical reaction referred to as hydration reaction. By way of extension, the term "hydraulic binder" shall extend to binders having pozzolanic and/or latent hydraulic properties. This means, that the term "hydraulic binder" also encompasses binders that need additional components, in particular calcium hydroxide, for their hydration reaction.

Portland cement preferably is chosen from the group consisting of cements according to standard EN 197-1 or EN 197-5. Preferably, Portland cement is chosen from CEM I, CEM II, CEM III, CEM IV, or CEM V according to standard EN 197-1, or from CEM II or CEM VI according to standard EN 197-5.

A slag is a by-product of an industrial process for example involving the melting of a starting material, said melting being intended to separate metals from an oxide phase, said oxide phase being called a slag. Ladle slags are steel slags originating from the secondary metallurgy of steel in a ladle furnace where liquid steel from a converter or from an electric arc furnace is heated up to the proper casting temperature and is prepared for specific requirements of its composition. The ladle slag floats on top of the molten steel in the ladle furnace, is separated from the steel, and cooled, typically by stockpiling in the open air. Ladle slags can be milled to a desired fineness for further use.

The chemical composition of ladle slags can be analyzed by X-ray fluorescence (XRF) whereas the mineralogical phases may be analyzed using X-ray diffraction (XRD) using the Rietveld method.

Ladle slags typically are rich in calcium oxide and aluminum oxide and have somewhat lower contents of SiO₂. A typical ladle slag may comprise 20 - 60 w% of CaO, 10 - 50 w% of Al₂O₃, 1 - 30 w% of SiO₂, and may further comprise smaller amounts of MgO, Fe₂O₃, TiO₂, P₂O₅, and other oxides.

The chemical and mineralogical composition of ladle slags may vary considerably, depending on the type of treatment of the molten steel in the ladle furnace. For example, ladle slags typically comprise calcium aluminates, in particular CA and C12A7 (C: CaO, A: Al₂O₃) along with dicalcium silicate C2S (S: SiO₂). Where high amounts of aluminum are used in the secondary steel refinery process, an increased amount of calcium aluminates is present in the ladle slag. Whereas treatment with silicon may lead to the formation of additional calcium aluminosilicates such as C2AS or C3AS3 as well as iron containing phases such as C4AF (F: Fe₂O₃). Phases present may also be more or less hydrated. The mineralogical phase composition of ladle slags may therefore vary considerably. It is believed that the reactivity and activation potential of ladle slags does depend on their mineralogical phase composition and especially on the amount of aluminate phases and of silicate phases present. It is to be understood that the term "aluminate phases" as well as the term "silicate phases" each do not encompass aluminosilicate phases.

A preferred ladle slag of the present invention has a content of crystalline aluminate phases, in particular of C3A and C12A7, of at least 10 w%, preferably at least 20 w%, more preferably of between 20 - 40 w% or of between 60 - 80 w%, and a content of crystalline silicate phases, in particular of C2S, of less than 40 w%, preferably less than 30 w%, more preferably of between 10 - 20 w% or of between 0 - 15 w%, in each case based on the total dry weight of the ladle slag. A "content of C3A and C12A7" means that the total amount of C3A plus C12A7 is within such range.

Very preferably, ladle slag of the present invention has a content of crystalline aluminate phases, in particular of C3A and C12A7, of 20 - 40 w% and a content of crystalline silicate phases, in particular of C2S, of 10 - 20 w%, in each case relative to the total dry weight of the ladle slag.

Equally preferably, ladle slag of the present invention has a content of crystalline aluminate phases, in particular of C3A and C12A7, of 60 - 80 w% and a content of crystalline silicate phases, in particular of C2S, of 0 - 15 w%, in each case relative to the total dry weight of the ladle slag.

Further preferred, a ladle slag of the present invention has a content of calcium aluminosilicate, in particular of C2AS, of less than 5 w%, based on total dry weight of the ladle slag.

It has been found that ladle slags having such mineralogical composition are particularly suitable as activators where the hydraulic binder does not comprise Portland cement.

Ladle slags comprising at least 10 w%, preferably at least 20 w%, more preferably between 20 - 40 w% or between 60 - 80 w%, of C3A and C12A7 and less than 40 w%, preferably less than 30 w%, more preferably between 10 - 20 w% or between 0 - 15 w%, of C2S are particularly suitable as activators with hydraulic binders not comprising Portland cement and comprising at least one compound selected from the group consisting of calcium aluminate cement, calcium sulfoaluminate cement, pozzolanic materials, latent hydraulic materials, calcium sulfate, calcium oxide, calcium hydroxide, or mixtures thereof, especially selected from the group consisting of raw clay, calcined clay, raw laterite, calcined laterite, ground granulated blast furnace slag, crystalline blast furnace slag, copper slag, nickel slag, red mud, calcined or vitrified red mud, fly ash, silica fume, oil shale, diatomaceous earth, rice husk ash, and/or de-lithiated beta spodumene.

Ladle slags useful in the present context preferably have a content of amorphous phases of not more than 50 w%, such as between 10 - 50 w% or 15 - 45 w%, preferably not more than 20 w%, such as between 5 - 20 w%, relative to the total dry weight of the ladle slag.

Ladle slags useful in the present context preferably have a content of crystalline hydrated phases. Crystalline hydrated phases can be described by the general formula [*M*^{II}₁*_{-y}M*^{III}*_{y}*(OH)₂]*_{y}* [*A*_{*n-y*/*ln*}] · *n*H₂O. Therein, M^{II} represents a divalent cation such as, for example, Ca²⁺ or Mg²⁺, and M^{III} represents a trivalent cation such as, for example, Al³⁺ or Fe³⁺, and A represents an anion such as, for example, hydroxide, carbonate, chloride, nitrate, or sulfate. Examples of crystalline hydrated phases are katoite, hydrogarnet, hydrocalumite, hydrotalcite, portlandite, and/or hydrated aluminoferrites.

Preferably, ladle slags of the present invention have a content of crystalline hydrated phases of at least 3 w%, more preferably at least 7 w%, especially at least 10 w%, relative to the total dry weight of the ladle slag. Preferably the content of crystalline hydrated phases is not more than 50 w%, more preferably not more than 25 w%, especially not more than 25 w%, relative to the total dry weight of the ladle slag. For example, a suitable ladle slag may comprise crystalline hydrated phases in an amount of between 3 - 50 w%, more preferably 7 - 30 w%, still more preferably 10 - 25 w%, relative to the total dry weight of the ladle slag.

Very preferably, the activator consists of ladle slag as described above.

It is preferred, within the present context, that the ladle slag has an average particle size d50 of between 2 - 35 µm, especially between 3 - 15 µm, measured by laser diffraction. The particle size d50 is the average particle size. Preferably, the particle size d90, which is the particle size where 90% of the particles of a respective ladle slag are smaller, is below 150 µm, especially is below 100 µm, measured by laser diffraction. It is further preferred that the ratio of particle size d90 to particle size d10, where the d10 is the particle size where 90% of the particles are bigger, is between 10 - 35. Particle size distribution can be determined by laser diffraction according to standard ISO 13320:2020.

The Blaine fineness of ladle slags, measured according to standard DIN 66126, preferably is at least 2000 cm²/g and can be as high as 12000 cm²/g. It is thus possible, within the present context, to use ultrafine ladle slag. Preferred ladle slags have a Blaine fineness, measured according to standard DIN 66126, of 3500 cm²/g, 4000 cm²/g, 4500 cm²/g, 5000 cm²/g, or 6000 cm²/g.

The hydraulic binder comprises at least one compound selected from the group consisting of calcium aluminate cement, calcium sulfoaluminate cement, pozzolanic materials, and/or latent hydraulic materials. The hydraulic binder may additionally comprise at least one compound selected from the group consisting of calcium sulfate, calcium oxide, calcium hydroxide, or mixtures thereof.

Very preferably the hydraulic binder comprises a pozzolanic and/or latent hydraulic material selected from the group consisting of raw clay, calcined clay, raw laterite, calcined laterite, ground granulated blast furnace slag, crystalline blast furnace slag, copper slag, nickel slag, red mud, calcined or vitrified red mud, fly ash, silica fume, oil shale, diatomaceous earth, rice husk ash, de-lithiated beta spodumene, or mixtures thereof.

Raw clay within the present context are solid materials that are composed to at least 30 wt.-% of clay minerals and that are not treated by heat. Clay minerals belonging to the kaolin group, especially kaolinite, and micas, especially muscovite and illite, as well as mixtures thereof are especially preferred. Calcined clays within the present context are raw clays that have been put to a heat treatment, preferably at a temperature between 500 - 900 °C, or in a flash calcination process at temperatures between 800 - 1100 °C. A suitable flash calcination process is for example described in WO 2014/085538.

Laterite is a surface product that occurs frequently in tropical regions and is formed by intensive and prolonged weathering of the underlying rocks. Typical minerals present in laterite are kaolinite, halloysite, goethite, hematite, gibbsite. Calcined laterites especially are low-temperature calcined laterites that have been thermally treated at temperatures between 500 - 1200°C or in a flash calcination process at temperatures between 800 - 1100 °C. A suitable flash calcination process is for example described in WO 2014/085538.

A slag is a by-product from an industrial process of extracting a metal from a metal containing ore. In particular in such process the respective metal is separated from an oxide phase, the latter being called a slag.

Blast furnace slag is obtained as the by-product of the iron extraction from iron ore in a blast furnace. Ground granulated blast furnace slag is blast furnace slag that has been quenched for example by a cold water and is ground to a desired fineness. Copper slag results from the extraction of copper from copper containing ore. Nickel slag results from the extraction of nickel from nickel containing ore.

Red mud, also called bauxite residue, is a by-product generated during the extraction of aluminum from bauxite, especially in the Bayer process. Red mud is particularly rich in iron oxides. Red mud can also be in a calcined or vitrified form, for example obtained in a flash calcination process as described in WO 2014/085538.

De-lithiated beta spodumene is the material remaining after lithium has been extracted from naturally occurring spodumene mineral, especially by acid or alkaline leaching.

According to embodiments, the hydraulic binder consists of at least one compound selected from the group consisting of calcium aluminate cement, calcium sulfoaluminate cement, pozzolanic materials, latent hydraulic materials, calcium sulfate, calcium oxide, calcium hydroxide, or mixtures thereof, especially selected from the group consisting of raw clay, calcined clay, raw laterite, calcined laterite, ground granulated blast furnace slag, crystalline blast furnace slag, copper slag, nickel slag, red mud, calcined or vitrified red mud, fly ash, silica fume, oil shale, diatomaceous earth, rice husk ash, and/or de-lithiated beta spodumene.

Of course, the hydraulic binder can be a mixture of two or more of calcium aluminate cement, calcium sulfoaluminate cement, pozzolanic materials, latent hydraulic materials, calcium sulfate, calcium oxide, calcium hydroxide. Especially a mixture of two or more of calcium aluminate cement, calcium sulfoaluminate cement, calcium sulfate, calcium oxide, calcium hydroxide, raw clay, calcined clay, raw laterite, calcined laterite, ground granulated blast furnace slag, crystalline blast furnace slag, copper slag, nickel slag, red mud, calcined or vitrified red mud, fly ash, silica fume, oil shale, diatomaceous earth, rice husk ash, and/or de-lithiated beta spodumene.

It can be preferred that a hydraulic composition of the present invention additionally comprises at least one salt of carbonate or bicarbonate, preferably at least one alkali metal carbonate or alkali metal bicarbonate.

Very preferred carbonate or bicarbonates are lithium carbonate, sodium carbonate, and sodium bicarbonate. Especially preferred is a combination of lithium carbonate and sodium bicarbonate.

The addition of at least one salt of carbonate or bicarbonate further activates the hydraulic binder composition.

"Activation" within the present context can be measured as an increase in strength, especially flexural strength or compressive strength, of a composition after a given time of hardening and when compared to the same composition but without the activating principle. Compressive strength can in particular be measured according to standard EN 12190:1998. Flexural strength can in particular be measured in a three-point bending test.

Preferably, the at least one salt of carbonate or bicarbonate, in particular the at least one alkali metal carbonate or alkali metal bicarbonate, especially the lithium carbonate, sodium carbonate, and/or sodium bicarbonate, is present in an amount of between 0.05 - 2 w%, relative to the total dry weight of the hydraulic binder.

According to embodiments, hydraulic binder compositions comprise or consist of,
a) 20 - 90 w%, relative to the dry weight of the hydraulic binder composition, of a hydraulic binder selected from the group consisting of calcium aluminate cement, calcium sulfoaluminate cement, pozzolanic materials, latent hydraulic materials, or mixtures thereof,
b) 1 - 15 w%, preferably 3 - 11 w%, relative to the total dry weight of the hydraulic binder of ladle slag, and
c) optionally 0.05 - 2 w%, relative to the total dry weight of the hydraulic binder, of at least one salt of carbonate or bicarbonate, especially lithium carbonate, sodium carbonate, and/or sodium bicarbonate.

According to embodiments, hydraulic binder compositions comprise or consist of,
a) 20 - 90 w%, preferably 50 - 70 w%, relative to the dry weight of the hydraulic binder composition, of at least one hydraulic binder selected from the group consisting of calcium aluminate cement, calcium sulfoaluminate cement, pozzolanic materials, latent hydraulic materials,
b) 1 - 15 w%, preferably 3 - 11 w%, relative to the total dry weight of the hydraulic binder, of ladle slag, and,
c) optionally 0.05 - 2 w%, relative to the total dry weight of the hydraulic binder, of at least one salt of carbonate or bicarbonate, especially lithium carbonate, sodium carbonate, and/or sodium bicarbonate,
   wherein the content of Portland cement is not more than 1 w%, preferably not more than 0.1 w%, especially 0 w%, relative to the dry weight of the hydraulic binder composition.

It is further preferred that the hydraulic binder comprises calcium oxide and/or calcium hydroxide. In particular, the hydraulic binder comprises calcium oxide and/or calcium hydroxide. A preferred amount of calcium oxide and/or calcium hydroxide is between 5 - 15 w%, relative to the total dry weight of the hydraulic binder composition.

According to embodiments, hydraulic binder compositions comprise or consist of,
a) 20 - 90 w%, preferably 50 - 70 w%, of at least one hydraulic binder selected from the group consisting of calcium aluminate cement, calcium sulfoaluminate cement, pozzolanic materials, and latent hydraulic materials,
b) 5 - 15 w%, relative to the total dry weight of the hydraulic binder composition, of calcium oxide and/or calcium hydroxide,
c) 1 - 15 w%, preferably 3 - 11 w%, relative to the total dry weight of the hydraulic binder, of ladle slag and
d) optionally 0.05 - 2 w%, relative to the total dry weight of the hydraulic binder, of at least one salt of carbonate or bicarbonate, especially lithium carbonate, sodium carbonate, and/or sodium bicarbonate,
   wherein the content of Portland cement is not more than 1 w%, preferably not more than 0.1 w%, especially 0 w%, relative to the dry weight of the hydraulic binder composition.

It is preferred that the hydraulic binder comprises calcium sulfate. The term "calcium sulfate" within the present context encompasses calcium sulfate dihydrate, calcium sulfate hemihydrate (alpha- and beta-form), and anhydrite. This is especially the case where the hydraulic binder comprises at least one pozzolanic and/or latent hydraulic material. The presence of calcium sulfate modulates the reactivity and contributes to the formation of important phases formed during hydration, such as ettringite. A preferred amount of calcium sulfate is between 1 - 15 w%, relative to the total dry weight of the hydraulic binder composition.

According to embodiments, hydraulic binder compositions comprise or consist of,
a) 20 - 90 w%, preferably 50 - 70 w%, of at least one hydraulic binder selected from the group consisting of calcium aluminate cement, calcium sulfoaluminate cement, pozzolanic materials, and latent hydraulic materials,
b) 5 - 15 w%, relative to the total dry weight of the hydraulic binder composition, of calcium oxide and/or calcium hydroxide,
c) 1 - 15 w%, relative to the total dry weight of the hydraulic binder composition, of calcium sulfate,
d) 1 - 15 w%, preferably 3 - 11 w%, relative to the total dry weight of the hydraulic binder, of ladle slag, and
e) optionally 0.05 - 2 w%, relative to the total dry weight of the hydraulic binder, of at least one salt of carbonate or bicarbonate, especially lithium carbonate, sodium carbonate, and/or sodium bicarbonate,
   wherein the content of Portland cement is not more than 1 w%, preferably not more than 0.1 w%, especially 0 w%, relative to the dry weight of the hydraulic binder composition.

It can be preferred that the hydraulic binder composition additionally comprises at least one kinetic regulator selected from the group consisting of alkanolamines, reducing agents, sugars, sugar acids, carboxylic acids and their salts, phosphonates, amino acids and their salts, sulfamic acid, glyoxal, acetylacetone, pyrocatechol, nitrilotri(methylphosphonic acid), etidronic acid, mineral salts, and mixtures thereof.

A "kinetic regulator" within the present context is a material that can increase or decrease the speed of hydration reactions. The increase or decrease of the speed of **a hydration** reaction can be measured by an increase or decrease in the setting time, for example measured in a Vicat apparatus according to standard EN 196-3, or as the increase or decrease of mechanical strength after a given time, in particular after several hours and up to 2 days, for example compressive strength measured according to standard EN 12190:1998, in each case in relation to a reference not comprising the kinetic regulator.

One type of suitable kinetic regulators are alkanolamines. Alkanolamines are preferably selected from the group consisting of monoethanolamine, diethanolamine, triethanolamine (TEA), diethanolisopropanolamine (DEIPA), ethanoldiisopropanolamine (EDIPA), isopropanolamine, diisopropanolamine, triisopropanolamine (TIPA), N-methyldiisopropanolamine (MDIPA), N-methyldiethanolamine (MDEA), tetrahydroxyethylethylenediamine (THEED), and tetrahydroxyisopropylethylenediamine (THIPD), as well as mixtures of two or more of these alkanolamines. Preferred alkanolamines are triethanolamine (TEA), triisopropanolamine (TIPA), diethanolisopropanolamine (DEIPA), and ethanoldiisopropanolamine (EDIPA). Especially preferred alkanolamines are diethanolisopropanolamine (DEIPA), ethanoldiisopropanolamine (EDIPA), and triisopropanolamine (TIPA).

Another type of suitable kinetic regulators are sugars. A "sugar" in the sense of the present invention is a carbohydrate having an aldehyde group. In particular, the sugar belongs to the group of monosaccharides or disaccharides. Examples of sugars include, but are not limited to, glyceraldehyde, threose, erythrose, xylose, lyxose, ribose, arabinose, allose, altrose, glucose, mannose, gulose, idose, galactose, tallose, fructose, sorbose, lactose, maltose, sucrose, lactulose, trehalose, cellobiose, chitobiose, isomaltose, palatinose, mannobiose, raffinose, and xylobiose. Sugars can also be used in form of dextrines, vinasse, or molasse. Both, D and L-form of sugars are likewise preferred. Especially preferred sugars are fructose, mannose, maltose, glucose, galactose, dextrines, vinasse, and molasses.

Another type of suitable kinetic regulators are sugar acids or their salts. A "sugar acid" in the context of the present invention is a monosaccharide having a carboxyl group. It may belong to any of the classes of aldonic acids, ursonic acids, uronic acids or aldaric acids. Preferably, it is an aldonic acid. Examples of sugar acids useful in connection with the present invention include, but are not limited to gluconic acid, **ascorbic** acid, neuraminic acid, glucuronic acid, galacturonic acid, iduronic acid, mucilic acid and saccharic acid. The sugar acid may be in the form of the free acid or as a salt. According to embodiments, salts of sugar acids may be salts with metals of groups la, IIa, Ib, IIb, IVb, Vlllb of the periodic table of elements. Preferred salts of sugar acids are salts of alkali metals, alkaline earth metals, iron, cobalt, copper or zinc. Especially preferred are salts with sodium, potassium, and calcium. Both, D- and L-form of sugar acids are likewise preferred. An especially preferred sugar acid is gluconic acid and its salts, especially sodium gluconate.

A preferred type of kinetic regulator is ethylenediamine tetra(methylene phosphonic acid) (EDTMP).

Another type of suitable kinetic regulators are amino acids or their salts. Amino acids preferably are selected from the group consisting of glycine, lysine, glutamate, glutamic acid, aspartic acid, polyaspartic acid, methionine, nitrilotriacetic acid (NTA), iminodisuccinic acid, methylglycine-N,N-diacetic acid, and N,N-bis(carboxylatomethyl)glutamic acid, ethylenediamine disuccinic acid (EDDS), ethylenediamine tetraacetic acid (EDTA), hexamethylendiamine tatraacetic acid (HEDTA), diethylenetriamine pentaacetic acid (DTPA) or their salts. Especially preferred are salts of alkali metals or alkaline earth metals. In particular, salts are selected from the group consisting of tetratsodium N,N-bis(carboxylatomethyl)glutamate, trisodium methylglycine-N,N-diacetate, tetrasodium iminodisuccinate (IDS), trisodium ethylenediamine disuccinate, tetrasodium ethylenediamine tetraacetate, and tetrasodium hexamethylendiamine tetraacetate.

Another type of suitable kinetic regulators are carboxylic acids or their salts. The term "carboxylic acid" means any organic molecule with a carboxylic acid or carboxylate group, except sugar acids as described above or amino acids as described above. Especially preferred carboxylic acids are formic acid, glycolic acid, citric acid, lactic acid, malic acid, tartaric acid, oxalic acid, malonic acid, succinic acid, glutaric acid, adipic acid, and salicylic acid. The carboxylic acid may be in the form of the free acid or in the form of a salt. According to embodiments, salts of carboxylic acids may be salts with metals of groups la, IIa, Ib, IIb, IVb, VIIIb of the periodic table of elements. Preferred salts of sugar acids are salts of alkali metals, alkaline earth metals, iron, cobalt, copper or zinc. Especially preferred are salts with sodium, potassium, and **calcium.** Preferred salts of carboxylic acids are calcium malonate, calcium succinate, calcium lactate, potassium citrate, and sodium citrate.

Another type of suitable kinetic regulators are reducing agents. Within the present context reducing agents are materials with a reduction potential measured under standard conditions against a standard reference hydrogen half-cell of below 0.77 V. That is, suitable reducing agents have a half-cell potential lower than the couple Fe³⁺/Fe²⁺. Reducing agents are preferably selected from the group consisting of thiosulfates, thiocyanates, and sulfides, preferably from sodium thiosulfate or potassium sulfide. Reducing agents within the present context do not belong to any of the groups of alkanolamines, sugars, sugar acids, carboxylic acids and their salts, or amino acids and their salts as described above.

Other suitable kinetic regulators are sulfamic acid, glyoxal, acetylacetone, pyrocatechol, nitrilotri(methylphosphonic acid), and etidronic acid.

Another type of suitable kinetic regulators are mineral salts. Within the present context mineral salts are salts selected from the group consisting of alkaline metal or earth alkaline metal nitrates, alkaline metal or earth alkaline metal nitrites, alkaline metal or earth alkaline metal chlorides, and aluminum sulfate. Especially preferred mineral salts are calcium nitrite, calcium nitrate, calcium chloride, magnesium chloride, and aluminum sulfate. Another preferred mineral salt useful as kinetic regulator is calcium carbonate, in particular very fine calcium carbonate such as precipitated calcium carbonate (PCC) or ultrafine calcium carbonate (UFCC). Particularly suitable PCC of the present invention has an average particle size d50 of between 0.01 - 2 µm, preferably 0.05 - 0.1 µm, measured according to standard ISO 13320:2009. Particularly suitable PCC of the present invention has a BET surface of at least 10 m²/g, preferably at least 15 m²/g, for example 17 - 25 m²/g. Particularly suitable ultrafine calcium carbonate has an average particle size of between 0.01 - 500 µm, preferably 0.05 - 400 µm, more preferably 0.1 - 350 µm, still more preferably 2 - 300 µm. In particular, the average particle size d50 is > 10 µm and/or the particle size d98 > 250 µm. Particularly suitable UFCC of the present invention has a Blaine surface as measured according to standard DIN 66126 of at least 1000 m²/kg.

Very preferably, the kinetic regulator is selected from the group consisting of hydroxycarboxylic acids, alkanolamines, and mixtures thereof.

Preferably, the at least one kinetic regulator is comprised in the hydraulic binder composition in an amount of between 0.1 - 2 w%, relative to the total dry weight of the hydraulic binder.

According to embodiments, hydraulic binder compositions comprise or consist of,
a) 20 - 90 w%, relative to the dry weight of the hydraulic binder composition, of a hydraulic binder selected from the group consisting of calcium aluminate cement, calcium sulfoaluminate cement, pozzolanic materials, latent hydraulic materials, or mixtures thereof,
b) 1 - 15 w%, preferably 3 - 10 w%, relative to the total dry weight of the hydraulic binder of ladle slag,
c) optionally 0.05 - 2 w%, relative to the total dry weight of the hydraulic binder, of at least one salt of carbonate or bicarbonate, especially lithium carbonate, sodium carbonate, and/or sodium bicarbonate, and
d) 0.1 - 2 w%, relative to the total dry weight of the hydraulic binder, of at least one kinetic regulator.

According to embodiments, hydraulic binder compositions comprise or consist of,
a) 20 - 90 w%, preferably 50 - 70 w%, relative to the dry weight of the hydraulic binder composition, of at least one hydraulic binder selected from the group consisting of calcium aluminate cement, calcium sulfoaluminate cement, pozzolanic materials, latent hydraulic materials,
b) 1 - 15 w%, preferably 3 - 10 w%, relative to the total dry weight of the hydraulic binder, of ladle slag,
c) optionally 0.05 - 2 w%, relative to the total dry weight of the hydraulic binder, of at least one salt of carbonate or bicarbonate, especially lithium carbonate, sodium carbonate, and/or sodium bicarbonate, and
d) 0.1 - 2 w%, relative to the total dry weight of the hydraulic binder, of at least one kinetic regulator,
   wherein the content of Portland cement is not more than 1 w%, preferably not more than 0.1 w%, especially 0 w%, relative to the dry weight of the hydraulic binder composition.

According to embodiments, hydraulic binder compositions comprise or consist of,
a) 20 - 90 w%, preferably 50 - 70 w%, of at least one hydraulic binder selected from the group consisting of calcium aluminate cement, calcium sulfoaluminate cement, pozzolanic materials, and latent hydraulic materials,
b) 5 - 15 w%, relative to the total dry weight of the hydraulic binder composition, of calcium oxide and/or calcium hydroxide,
c) 1 - 15 w%, preferably 3 - 10 w%, relative to the total dry weight of the hydraulic binder, of ladle slag,
d) optionally 0.05 - 2 w%, relative to the total dry weight of the hydraulic binder, at least one salt of carbonate or bicarbonate, especially lithium carbonate, sodium carbonate, and/or sodium bicarbonate, and
e) 0.1 - 2 w%, relative to the total dry weight of the hydraulic binder, of at least one kinetic regulator,
   wherein the content of Portland cement is not more than 1 w%, preferably not more than 0.1 w%, especially 0 w%, relative to the dry weight of the hydraulic binder composition.

According to embodiments, hydraulic binder compositions comprise or consist of,
a) 20 - 90 w%, preferably 50 - 70 w%, of at least one hydraulic binder selected from the group consisting of calcium aluminate cement, calcium sulfoaluminate cement, pozzolanic materials, and latent hydraulic materials,
b) 5 - 15 w%, relative to the total dry weight of the hydraulic binder composition, of calcium oxide and/or calcium hydroxide,
c) 1 - 15 w%, relative to the total dry weight of the hydraulic binder composition, of calcium sulfate,
d) 1 - 15 w%, preferably 3 - 10 w%, relative to the total dry weight of the hydraulic binder, of ladle slag,
e) optionally 0.05 - 2 w%, relative to the total dry weight of the hydraulic binder, of at least one salt of carbonate or bicarbonate, especially lithium carbonate, sodium carbonate, and/or sodium bicarbonate, and
f) 0.1 - 2 w%, relative to the total dry weight of the hydraulic binder, of at least one kinetic regulator,
   wherein the content of Portland cement is not more than 1 w%, preferably not more than 0.1 w%, especially 0 w%, relative to the dry weight of the hydraulic binder composition.

It is preferred that a hydraulic binder composition of the present invention does not comprise aggregates and fillers. However, aggregates and/or fillers may be mixed with a hydraulic binder composition of the present invention to prepare a mortar composition.

In another aspect, the present invention relates to a mortar composition comprising a hydraulic binder composition as described above and additionally comprising aggregates, fillers, and/or admixtures.

All features and embodiments as described above also apply to this aspect.

Aggregates can be any material that is non-reactive in the hydration reaction of binders. Aggregates can be any aggregate typically used for construction materials. Typical aggregates are for example rock, crushed stone, gravel, sand, especially quartz sand, river sand and/or manufactured sand, recycled concrete, glass, bio sourced materials such as sunflower pith or hemp straw.

Aggregates preferably are in particulate form. Preferred aggregates have a particle size between 0.063 mm - 4 mm.

Fillers are materials that are non-reactive in the hydration reaction of binders and that have a smaller particle size than aggregates. Preferably, the particle size of fillers is below 0.063 mm. Suitable fillers include ground limestone, ground dolomite, and/or ground aluminum oxide.

Admixtures are admixtures common in the concrete or mortar industry and that are chemically different from the components of the hydraulic binder as described above. In particular, admixtures are selected from the group consisting of plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, steel passivating agents, and mixtures thereof.

Preferably, the mortar composition comprises 5 - 60 w%, more preferably 15 - 40 w% of the hydraulic binder composition as described above, 30 - 85 w%, preferably 50 - 75 w% of at least one aggregate and/or filler, and 0.01 - 10 w% of at least one admixture.

The mortar composition may be a dry mortar composition. A dry mortar composition is in the form of a free-flowing powder and is essentially free of water. A dry mortar composition is the preferred form for storage of a mortar composition of the present invention.

The mortar composition may also be a wet mortar composition. A wet mortar composition comprises water. A wet mortar composition may be prepared by mixing a dry mortar composition with water. A suitable amount of water can be in a weight ratio of water to dry mortar composition of between 0.1 - 0.8. The rheology of the wet mortar composition may range from pasty to flowable. Typically, a smaller amount of water added to the dry mortar composition will lead to a more pasty wet mortar composition, while a higher amount of water added will lead to a more flowable wet mortar composition.

Hydration reactions start with the addition of water and strength is developed thereby.

In another aspect, the present invention relates to the use of a hydraulic binder composition as described above, or of mortar composition as described above, to prepare a construction material, in particular a cementitious tile adhesive, a grouting material, a self-levelling underlayment, a self-levelling overlayment, a render, a repair mortar, a masonry thin join mortar or concrete, a screed, a wall leveler, a non-shrink grout, a thin joint mortar, a waterproofing mortar, an anchoring mortar, or a mortar for free-form applications.

All features and embodiments as described above also apply to this aspect.

A cementitious tile adhesive is especially according to standard EN 12004-1. A grouting material is especially according to standard EN 13888. A self-levelling underlayment or a self-levelling overlayment is especially according to standard EN 13813. A render is especially according to standard EN 998-1. A repair mortar is especially according to standard EN 1504-3. A masonry mortar or concrete is especially according to standards EN 998-2 and EN 206-1. A screed is especially according to standard EN 13813. A non-shrink grout is especially according to standard EN 1504-6. A thin joint mortar is especially according to standard EN 998-2. A waterproofing mortar is especially according to standard EN 1504-2. An anchoring mortar is especially according to standard EN 1504-6.

In another aspect, the present invention relates to a hardened body obtained by hardening a hydraulic binder composition as described above, or of mortar composition as described above.

All features and embodiments as described above also apply to this aspect.

Hardening starts by the addition of water to a hydraulic binder composition or a mortar composition of the present invention.

Ways to mix the hydraulic binder composition or the mortar composition of the present invention with water are not particularly limited. For example, the hydraulic binder composition or the mortar composition can be provided to a mixing aggregate, water added, and mixing done until a homogeneous wet mix is obtained. Suitable mixing aggregates include, but are not limited to hand-held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise.

Shaping of the wet mix can be done for example by way of brushing, rolling, troweling, spraying, pouring, or dispensing. It is possible to use molds.

Hardening is preferably done at temperatures between +4 and + 40 °C. However, lower and higher temperatures are possible. Hardening under pressure or with steam is also possible but is not preferred.

### Examples

The following table 1 shows an overview of raw materials used.

**Table 1: Raw materials**

| | |
|---|---|
| LS 1 | Ladle slag (particle size d90 = 26µm, d50 = 7.5µm) with the following phase composition (by XRD analysis): 34% C2S, 4% C12A7, 11% C2AS, 20% amorphous phases |
| LS 2 | Ladle slag (particle size d90 = 83µm, d50 = 20µm) with the following phase composition (by XRD analysis): 6% C2S, 10% C12A7, 58% C3A, 17% amorphous phases |
| CA 1 | Calcium aluminate (particle size d90 = 85µm, d50 = 22µm) with the following phase composition (by XRD analysis): 0%C2S, 2% C12A7, 13% C3A, 43% CA, 12% C2AS, 8% C4AF, 6% F3O, 15% amorphous phases |
| CC 1 | Calcined clay (62% amorphous, 10% muscovitic; particle size d98 = 298µm) |
| CC 2 | Calcined laterite (particle size d98 = 250µm) |
| GGBS | Ground granulated blast furnace slag (Blaine fineness 4500 m²/kg) |
| BOF | Basic oxygen furnace slag |
| CS | Copper slag (particle size D50 = 6.4 µm), 93% amorphous |
| CaSO₄ | Natural calcium sulfate anhydrite |
| Ca(OH)₂ | Calcium hydroxide (Tradical H90) |
| Citrate | Trisodium citrate, >99.0% purity (Sigma Aldrich) |

For the preparation of compositions, dry constituents were mixed in the amounts indicated in the following tables 2 and 3 until visually homogeneous. Trisodium citrate, where added, were pre-mixed in the mixing water and thus added together with the mixing water in the amount indicated in following tables 2 and 3. The weight ratio of water to powder (w/p ratio) is given in below tables 2 and 3. The respective dry mix was gradually added to the mixing water while mixing on an IKA mixer at slow speed settings (200 - 300 rpm). After complete addition of the dry mix, mixing was continued for 2 minutes.

Compressive strength (C.S.) was measured after the time indicated in below tables 2 and 3 in accordance with standard EN 12190:1998.

Flexural strength (F.S.) was measured after the time indicated in below tables 2 and 3 in a three-point bending test as follows. The wet mix as prepared above was poured into a plastic mould (1.5 x 1.5 x 4.5 cm) pre-treated with a demoulding oil. Entrapped air was released by gently tapping the filled mould on a solid support. The surface was then levelled and smoothed with a spatula. The test specimen were cured inside the mould in a sealed plastic bag at 22 °C for the time indicated in below tables. Flexural strength was measured in a three-point bending test on demoulded samples placed on supporting pins (spaced 25 mm apart) and a force applied with a rate of 1 mm/min at the center of the test specimen.

**Table 2: Examples C-1 to C-4 (not inventive), and E-1 to E-2 (inventive)**

| **Examples** | **C-1** | **E-1** | **E-2** | **C-2** | **C-3** | **C-4** |
|---|---|---|---|---|---|---|
| CC1 [g] | 70 | 70 | 70 | 70 | 70 | 70 |
| LS 2 [g] | | 20 | 20 | | | |
| GGBS [g] | | | | 20 | | |
| BOF [g] | | | | | 20 | |
| CA1 [g] | | | | | | 20 |
| Ca(OH)₂ [g] | 20 | | | | | |
| CaSO₄ [g] | 10 | 10 | 10 | 10 | 10 | 10 |
| Citrate [g] | | | 6.3 | 6.3 | 6.3 | 6.3 |
| w/p ratio | 0.5 | 0.5 | 0.5 | 0.38 | 0.4 | 0.4 |
| F.S., 1d [MPa] | 0.4 | 1.4 | 3.5 | 0.02 | 0.1 | 1.2 |
| F.S., 7d [MPa] | 3.1 | n.m. | 4.5 | 0.03 | 0.5 | 3 |
| F.S., 28d [MPa] | n.m. | n.m. | 4.4 | 0.07 | 0.8 | n.m. |

| | | | | | | |
|---|---|---|---|---|---|---|
| n.m.: not measured | | | | | | |

It can be seen from the results in above table 2 that ladle slag is a suitable activator for calcined clay, in particular when combined with citrate as co-activator. Early strength and late strength can be increased. Ironmaking slag (GGBS) or steelmaking slag (BOF) as well as calcium aluminates having different phase composition as compared to the inventive ladle slag are not likewise suitable.

**Table 3: Examples C-5 to C-6 (not inventive), and E-3 (inventive)**

| **Examples** | **C-5** | **E-3** | **C-6** |
|---|---|---|---|
| CC2 [g] | 70 | 70 | 70 |
| LS 2 [g] | | 20 | |
| CA1 [g] | | | 20 |
| Ca(OH)₂ [g] | 20 | | |
| CaSO₄ [g] | 10 | 10 | 10 |
| Citrate [g] | | 6.3 | 6.3 |
| w/p ratio | 0.53 | 0.53 | 0.53 |
| F.S., 1d [MPa] | 1.6 | 3.1 | 0.22 |
| F.S., 7d [MPa] | 3.2 | 4.7 | 1.5 |
| F.S., 28d [MPa] | 3.1 | 4.2 | n.m. |

| | | | |
|---|---|---|---|
| n.m.: not measured | | | |

It can be seen from the results in above table 3 that ladle slag is a suitable activator for calcined laterite, in particular when combined with citrate as co-activator. Early strength and late strength can be increased. Ironmaking slag (GGBS) or steelmaking slag (BOF) as well as calcium aluminates having different phase composition as compared to the inventive ladle slag are not likewise suitable.

**Table 4: Examples C-7 to C-9 (not inventive), and E-4 to E-7 (inventive)**

| **Examples** | **C-7** | **C-8** | **C-9** | **E-4** | **E-5** | **E-6** | **E-7** |
|---|---|---|---|---|---|---|---|
| GGBS [g] | 70 | 70 | 70 | 70 | 70 | 70 | 70 |
| CEM II 42.5 N [g] | | 20 | 20 | | | | |
| LS 2 [g] | | | | 20 | 20 | 20 | 20 |
| Ca(OH)₂ [g] | 20 | | | | | | |
| CaSO₄ [g] | 10 | 10 | 10 | 10 | 10 | 10 | 10 |
| Citrate [g] | | | 1.8 | | 0.02 | 1.2 | 1.8 |
| w/p ratio | 0.35 | 0.35 | 0.35 | 0.35 | 0.35 | 0.35 | 0.35 |
| F.S., 1d [MPa] | 1.0 | 1.7 | 1.4 | 3.1 | 3.4 | 5.2 | 6.1 |
| F.S., 7d [MPa] | 4.4 | 1.8 | 5.4 | 5.7 | 6.2 | 6.2 | 8.1 |

It can be seen from the results in above table 4 that ladle slag is a suitable activator for ground granulated blast furnace slag, in particular when combined with citrate as co-activator. Early strength and late strength can be increased.

**Table 5: Examples C-10 to C-11 (not inventive), and E-8 to E-10 (inventive)**

| **Examples** | **C-10** | **E-8** | **E-9** | **E-10** | **C-11** |
|---|---|---|---|---|---|
| CS [g] | 70 | 70 | 70 | 70 | 70 |
| LS 2 [g] | | 20 | 20 | 20 | |
| CA1 [g] | | | | | 20 |
| Ca(OH)₂ [g] | 20 | | | | |
| CaSO₄ [g] | 10 | 10 | 10 | 10 | 10 |
| Citrate [g] | | | 0.35 | 6.3 | 6.3 |
| w/p ratio | 0.25 | 0.25 | 0.25 | 0.25 | 0.25 |
| F.S., 1d [MPa] | 0.0 | 3.2 | 3.8 | 4.7 | 3.0 |
| F.S., 7d [MPa] | 2.0 | 3.2 | 3.9 | 6.3 | 3.1 |
| F.S., 28d [MPa] | 6.6 | n.m. | n.m. | 9.9 | 4.4 |

| | | | | | |
|---|---|---|---|---|---|
| n.m.: not measured | | | | | |

It can be seen from the results in above table 5 that ladle slag is a suitable activator for copper slag, in particular when combined with citrate as co-activator. Early strength and late strength can be increased. Calcium aluminates having different phase composition as compared to the inventive ladle slag are not likewise suitable.

## Claims

1. A hydraulic binder composition comprising
a) a hydraulic binder selected from the group consisting of calcium aluminate cement, calcium sulfoaluminate cement, pozzolanic materials, latent hydraulic materials, or mixtures thereof,
b) an activator comprising or consisting of ladle slag.

2. The hydraulic binder composition according to claim 1, **characterized in that** ladle slag is present in an amount of not more than 35 w%, preferably not more than 20 w%, more preferably between 1 - 15 w%, especially between 3 - 10 w%, relative to the total dry weight of the hydraulic binder.

3. The hydraulic binder composition according to at least one of the previous claims, **characterized in that** the ladle slag has a content of crystalline aluminate phases, in particular of C3A and C12A7, of at least 10 w%, preferably at least 20 w%, more preferably of between 20 - 40 w% or of between 60 - 80 w%, and a content of crystalline silicate phases, in particular of C2S, of less than 40 w%, preferably less than 30 w%, more preferably of between 10 - 20 w% or of between 0 - 15 w%, in each case based on the total dry weight of the ladle slag.

4. The hydraulic binder composition according to at least one of the previous claims, **characterized in that** the ladle slag has a content of crystalline hydrated phases of at least 3 w%, more preferably at least 7 w%, especially at least 10 w%, relative to the total dry weight of the ladle slag, for example, a suitable ladle slag may comprise crystalline hydrated phases in an amount of between 3 - 50 w%, more preferably 7 - 30 w%, still more preferably 10 - 25 w%, relative to the total dry weight of the ladle slag.

5. The hydraulic binder composition according to at least one of the previous claims, **characterized in that** the hydraulic binder additionally comprises at least one compound selected from the group consisting of calcium sulfate, calcium oxide, calcium hydroxide, or mixtures thereof.

6. The hydraulic binder composition according to claim 5, **characterized in that** the hydraulic binder comprises a pozzolanic and/or latent hydraulic material selected from the group consisting of raw clay, calcined clay, raw laterite, calcined laterite, ground granulated blast furnace slag, crystalline blast furnace slag, copper slag, nickel slag, red mud, calcined or vitrified red mud, fly ash, silica fume, oil shale, diatomaceous earth, rice husk ash, de-lithiated beta spodumene, or mixtures thereof.

7. The hydraulic binder composition according to at least one of the previous claims, **characterized in that** the ladle slag has a content of amorphous phases of not more than 50 w%, such as between 10 - 50 w% or 15 - 45 w%, preferably not more than 20 w%, such as between 5 - 20 w%, relative to the total dry weight of the ladle slag.

8. The hydraulic binder composition according to at least one of the previous claims, **characterized in that** the ladle slag has a content of crystalline hydrated phases, especially of katoite, hydrogarnet, portlandite, and/or aluminoferrites, of not more than 35 w%, preferably not more than 30 w%, especially not more than 25 w%, relative to the total dry weight of the ladle slag.

9. The hydraulic binder composition according to at least one of the previous claims, **characterized in that** it additionally comprises at least one salt of carbonate or bicarbonate, preferably at least one alkali metal carbonate or alkali metal bicarbonate.

10. The hydraulic binder composition according to claim 9, **characterized in that** the at least one salt of carbonate or bicarbonate, in particular the at least one alkali metal carbonate or alkali metal bicarbonate, especially lithium carbonate, sodium carbonate and/or sodium bicarbonate, is present in an amount of between 0.05 - 2 w%, relative to the total dry weight of the hydraulic binder.

11. The hydraulic binder composition according to any of the previous claims, **characterized in that** it additionally comprises at least one kinetic regulator selected from the group consisting of alkanolamines, reducing agents, sugars, sugar acids, carboxylic acids and their salts, phosphonates, amino acids and their salts, sulfamic acid, glyoxal, acetylacetone, pyrocatechol, nitrilotri(methylphosphonic acid), etidronic acid, mineral salts, and mixtures thereof.

12. The hydraulic binder composition according to claim 11, **characterized in that** the kinetic regulator is selected from the group consisting of hydroxycarboxylic acids, alkanolamines, and mixtures thereof.

13. The hydraulic binder composition according to at least one of claims 11 and 12, **characterized in that** the at least one kinetic regulator is comprised in an amount of between 0.1 - 2 w%, relative to the total dry weight of the hydraulic binder.

14. A mortar composition comprising a hydraulic binder composition as claimed in at least one of claims 1 - 13 and additionally comprising aggregates, fillers, and/or admixtures.

15. Use of a hydraulic binder composition as claimed in at least one of claims 1 - 13, or of mortar composition as claimed in claim 14, to prepare a construction material, in particular a cementitious tile adhesive, a grouting material, a self-levelling underlayment, a self-levelling overlayment, a render, a repair mortar, a masonry thin join mortar or concrete, a screed, a wall leveler, a non-shrink grout, a thin joint mortar, a waterproofing mortar, an anchoring mortar, or a mortar for free-form applications.

16. A hardened body obtained by curing a hydraulic binder composition as claimed in at least one of claims 1 - 13, or of mortar composition as claimed in claim 14.
